(19) Europäisches Patentamt

European Patent Office

Office européen des brevets

(11) **EP 1 182 438 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(51) Int Cl.⁷: **G01K 15/00**

(21) Anmeldenummer: **01250349.6**

(22) Anmeldetag: **21.11.1996**

(54) **Verfahren zum Betrieb einer Temperaturfühleranordnung**

Method of operating a temperature sensing device

Procédé de conduite d'un dispositif capteur de température

(84) Benannte Vertragsstaaten:
**DE FR GB IT**

(30) Priorität: **24.11.1995 DE 19545258**

(43) Veröffentlichungstag der Anmeldung:
**27.02.2002 Patentblatt 2002/09**

(62) Dokumentnummer(n) der früheren Anmeldung(en) nach Art. 76 EPÜ:
**96250264.7 / 0 775 897**

(73) Patentinhaber: **ABB PATENT GmbH**
**68526 Ladenburg (DE)**

(72) Erfinder:
• **Huck, Ralf**
  **63457 Hanau (DE)**
• **Scheubel, Wolfgang**
  **63486 Bruchköbel (DE)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
EP-A- 0 404 567      DE-A- 2 042 047
FR-A- 2 712 695      SU-A- 1 582 029

## Beschreibung

Die Erfindung betrifft ein Verfahren zum Betrieb einer Temperaturfühleranordnung.

In vielen Bereichen der industriellen Prozeß- und Meßtechnik wird für eine optimale Prozeßsteuerung eine genaue Kenntnis der Temperatur benötigt Um die vielfältigen Einsatzmöglichkeiten von Temperaturfühlern abdecken zu können und darüber hinaus eine Eignung auch in der Reaktormeßtechnik sowie in chemischen Prozessen gewährleisten zu können, bedarf es der Erfüllung hoher Anforderungen. Diese Anforderungen sind robuster Aufbau, hohe Vibrations- und Temperaturschockbeständigkeit, sowie Unempfindlichkeit gegen chemisch aggressive Medien sowie ggf. gegen radioaktive Bestrahlung. Je nach Einsatzort müssen diese Bedingungen kumulativ erfüllt sein. Darüber hinaus sollten die Temperaturfühler noch eine hohe Meßgenauigkeit sowie eine hohe Reproduzierbarkeit über lange Zeitdauer aufweisen. In Erfüllung dieser Maßgaben sind die eigentlichen Temperaturfühler einer Temperaturfühleranordnung mechanisch sowie elektrisch einfach ausgebildet. Typisch für diese sogenannten Berührungsthermometer zur Temperaturmessung von Gasen oder Flüssigkeit ist ein einseitig geschlossenes Metallrohr, in dem ein Sensorelement hermetisch gekapselt angeordnet ist. Als Sensorelement dient dazu entweder ein Drahtmeßwiderstand, ein Schichtmeßwiderstand oder ein Thermoelement. Die Zuleitungsdrähte dieser Fühler sind zumeist mineralisolierte Metall-Leitungen, weil diese die o. g. Anforderungen gut erfüllen. Für Meßaufgaben, die eine genaue Temperaturbestimmung erfordern, werden hauptsächlich Widerstandsthermometer verwendet. Solche Widerstandsthermometer weisen eine sehr hohe Meßgenauigkeit sowie auch zeitlich gesehen eine hohe Reproduzierbarkeit auf, jedoch haben sie den Nachteil, dass sie gegenüber herkömmlichen Thermoelementen im Ansprechverhalten erheblich träger sind. Dies rührt hauptsächlich daher, dass ein Thermowiderstand, die Temperatur des Meßmediums aufgrund der höheren Masse und somit der höheren Wärmekapazität langsamer annimmt, als ein Thermoelement, bei dem nur die Thermokontaktstelle die Temperatur des Meßmediums annehmen muß. Somit sind Thermoelemente gegenüber Thermowiderständen erheblich flinker, wogegen der Thermowiderstand eine erheblich höhere Meßgenauigkeit aufweist. Die beiden Meßverfahren bzw. Meßelemente Thermowiderstand und Thermoelement haben die Eigenschaft unter Einwirkung von hohen Temperaturen bzw. Temperaturzyklen zu altern. D.h. sie verändern mit der Zeit ihre Kennlinie und damit die daraus abgeleitete Temperatur. Eine hohe Meßgenauigkeit kann daher nur sichergestellt werden, wenn die Genauigkeit der Fühler von Zeit zu Zeit durch eine Kalibrierung überprüft wird. Zu diesem Zweck muß der Fühler aus der Anlage ausgebaut werden.

Es gibt bekannte Temperaturfühleranordnungen, die durch Zusammenschaltung bzw. Zusammenverwendung von Thermoelementen und Thermowiderständen das flinke Ansprechverhalten der Thermoelemente und die hohe Meßgenauigkeit des Thermowiderstandes in Summe ausnutzen. Aus der DE 20 42 047 ist eine Temperaturmeßeinrichtung mit hoher Absolutgenauigkeit und großer Ansprechgeschwindigkeit bekannt, bei der die genannten beiden Eigenschaften durch gemeinsame Verwendung von Thermoelementen und Thermowiderstand vereint ist. Bei dieser bekannten Einrichtung ist ein Meßwiderstand vorgesehen, der in einer Umwandlung eines sogenannten Schutzrohres angeordnet ist. Des weiteren sind zwei Thermoelemente und ein Widerstandsthermometer innerhalb eines Schutzrohres vorgesehen. Dort sind die beiden Thermoelemente zur Differenzbildung gegeneinander geschaltet, und der dritte Temperaturfühler ist ein mechanisch stabiles Widerstandsthermometer. Die resultierende Temperaturanzeige T dieser Temperaturmeßeinrichtung setzt sich aus dem Temperaturmeßwert T(R) des Widerstandsthermometers und der Differenz der Meßwerte der beiden Thermoelemente ∆ T(TH) zusammen.

$$T = T(R) + \Delta\ T(TH)$$

Die Differenz der Meßwerte der beiden Thermoelemente resultiert aus der Tatsache, dass zwei Thermoelemente im Ansprechverhalten niemals gleich sind. Die sich ergebende Differenz ∆ T(TH) ist aber eine Funktion der Zeit, bis sich beide Meßwerte ausgeglichen haben. Beim Eintauchen einer derartigen Geberkombination in das Meßmedium ist die Ausgangsgröße der Temperaturmeßeinrichtung zunächst von dem Differenzmeßwert der Thermoelemente aufgrund der hohen Ansprechgeschwindigkeit des flinkeren Thermoelementes bestimmt. Das Differenzmeßsignal der Thermoelemente geht mit dem ansteigenden Meßwert des trägeren Thermoelementes gegen Null, während das Ausgangssignal des Widerstandsthermometers die Temperatur des Meßmediums abnimmt. Die Meßeinrichtung hat im ausgeglichenen Zustand nur noch den Fehler des Widerstandsthermometers, sie weist also eine hohe Absolutgenauigkeit auf. Dabei sind zwei Drähte zum Widerstandtemperaturfühler in das Schutzrohr hineingeführt, und die Thermoelemente sind gegeneinander geschaltet, miteinander verbunden, so dass für beide Thermoelemente zusammen nur zwei Drähte aus dem Schutzrohr herausgeführt werden. Dabei ist das eine Thermoelement in der Nähe des oberhalb der Meßspitze des Schutzrohres innerhalb desselben angeordnet und das zweite Thermoelement, nämlich das flinke Thermoelement ist dabei in der Meßspitze des Schutzrohres angeordnet. Eine solche räumliche Trennung ist hinsichtlich der Herstellung einer solchen Temperaturfühleranordnung erheblich aufwendig. Fernerhin findet hier eine galvanische Trennung der Thermoelemente vom Thermowiderstand statt, was zu gewissem Aufwand in der verarbeitenden Elektronik führt. Aus der DE 2415 672 ist des weiteren eine Einrichtung zur Femmessung einer Temperatur angegeben, bei dem neben einem temperaturempfindlichen Widerstand auch ein Thermoelement verwendet wird. Am Meßort dieser Einrichtung ist der temperaturabhängige Widerstand in einen Zweig einer Meßbrücke eingebracht. Eine Meßdiagonale liegt in Reihe mit einem Thermoelement einerseits und der Primärwicklung eines Transformators andererseits. Die Kaltlötstelle des Thermoelementes und des temperaturempfindlichen Widerstandes der Brückenschaltung sind auf gleichem Temperatumiveau gehalten. Hier soll es , bei Verwendung einer Wechselstromquelle, zu einer gegenseitigen Kompensation von Abweichungen der Bezugsspannung, also der Spannung der Kaltlötstelle eines Thermoelementes kommen. Keines der genannten Dokumente geht auf die Überwachung der Absolutgenauigkeit des Fühlers ein.

Ausgehend von diesem genannten Stand der Technik liegt der Erfindung hinsichtlich eines Meßverfahrens die Aufgabe zugrunde die Zuverlässigkeit des Meßwertes und die Funktionstauglichkeit der einzelnen Elemente überwachen zu können.

Die gestellte Aufgabe wird gemäß dem Oberbegriff des Patentanspruches 1 in Verbindung mit den kennzeichnenden Merkmale des Patentanspruchs gelöst.

Weitere Ausgestaltungen des erfindungsgemäßen Verfahrens zum Betrieb einer Temperaturfühleranordnung sind in den Ansprüchen 2 bis 6 angegeben.

Vorteilhaft ist hierbei, dass aufgrund der Anforderungen an die Meßtechnik hinsichtlich des Einsatzortes, und damit den Anforderungen des Explosionsschutzes genügend, die übliche Vierleiterschaltung im Effekt beibehalten wird. Hinsichtlich der Temperaturfühleranordnung werden sämtliche o. g. Anforderungen kumulativ erfüllt und die Anordnung ist dennoch erfindungsgemäß einfach. Das Gesamtsystem besteht in einem Ausführungsbeispiel aus einem temperaturabhängigen Widerstand, an dessen beiden Anschlußdrähten sich je ein Thermoelement elektrisch leitschlüssig befindet. Die beiden Thermoelemente sind entgegen dem zitierten Stand der Technik nicht mehr an wesentlich verschiedenen Orten untergebracht, sondern beide in der Nähe des temperaturabhängigen Widerstandes. Hinsichtlich des Verfahrens wird zum einen das Meßsignal des temperaturabhängigen Widerstandes zu einer anderen Zeitphase genommen als die Thermospannungen der Thermoelemente. Hierdurch werden Meßfehler dadurch vermieden, dass bei Abnahme der Thermospannungen der Thermoelemente kein Strom fließt, wogegen bei der Thermowiderstandsermittlung gerade dieser Strom maßgebend ist. Eine gegenseitige Verfälschung wird durch die dargestellte Trennung der Meßzeiten erfindungsgemäß erreicht. Die erfindungsgemäße Temperaturfühleranordnung ist einfach und robust ausgestaltet, und bietet dennoch höchste Meßgenauigkeit unter Beibehaltung der Vierleiterschaltung. Hinsichtlich des Verfahrens wird durch die zeitlich unterschiedliche Beaufschlagung der Meßanordnung erreicht, dass im wesentlichen auf komplizierte Kompensationsschaltungen, die im Stand der Technik teilweise im Temperaturfühler selbst angeordnet sind, verzichtet werden kann. In weiterer Ausgestaltung des Verfahrens können die Temperaturmessungen über den temperaturabhängigen Widerstand und die Thermoelemente in der dargestellten zeitlich verschiedenen Folge zyklisch vorgenommen werden. Dies hat den Vorteil, dass auch die erfindungsgemäße Verfahrensweise zwar diskret Temperaturen mißt, die jedoch durch die zyklische Wiederholung des Verfahrens durch nahezu beliebige Gestaltung der Frequenz der Meßzyklen quasi kontinuierlich verfolgt wird und zur Überwachung laufender Prozesse eingesetzt werden kann. Darüber hinaus läßt sich durch die Tatsache, dass die beiden Thermoelemente in benachbarter und thermisch nicht wesentlich unterschiedlicher Umgebung angeordnet sind, auch eine Selbstkontrolle der einzelnen Temperaturfühler realisieren. Die Erfindung ist in der Zeichnung dargestellt und nachfolgend näher beschrieben.

Es zeigt

Figur 1      eine Temperaturfühleranordnung im Schnitt
Figur 2      die Darstellung des Verfahrens

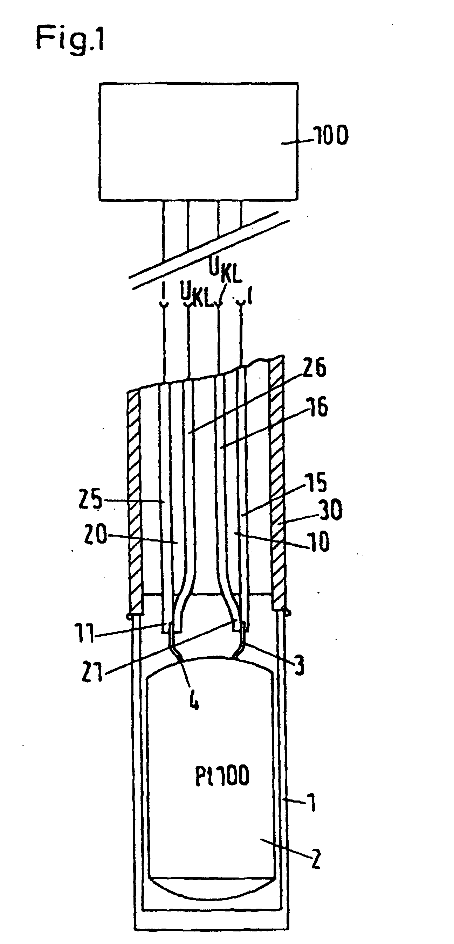

Figur 1 zeigt die Temperaturfühleranordnung im Längsschnitt. Innerhalb eines Schutzrohres 1 ist ein Thermowiderstand 2 in der Nähe der Meßspitze des Schutzrohres angeordnet. An das Schutzrohr 1 ist eine Metallmantelleitung 30 herangeführt und an demselben angeschweißt. Innerhalb der Metallmantelleitung 30 sind die vier Meßkabel 15, 16, 25, 26 angeordnet. Die Anschlußdrähte 3, 4 des Thermowiderstandes 2 sind dabei jeweils mit einem Thermoelement 10, 20 leitschlüssig verbunden. Dabei sind die Thermoelemente nicht an irgendeiner Stelle ihrer Schenkel mit den Anschlußdrähten des Thermowiderstandes verbunden, sondern die Meßspitze 11, 21 der Thermoelemente 10, 20 sind mit den Anschlußdrähten 3, 4 verbunden. In diesem Ausführungsbeispiel bestehen die äußeren Schenkel 15, 25 aus Nickeldrähten und die inneren Schenkel aus Nickel-Chrom-Drähten. Die nach außen geführten vier Drähte werden in den entsprechenden Meßphasen wie folgt beaufschlagt. In die äußeren, d.h. in diesem Ausführungsbeispiel in die Nickeldrähte wird der Strom eingeprägt, der zur Widerstandsmessung des Thermowiderstandes in der entsprechenden Meßphase dient. Dies ist vorteilhaft, weil die Nickeldrähte im Vergleich zu den Nickel-Chrom-Drähten einen kleineren spezifischen Widerstand aufweisen. Die Elektronik muß somit eine geringere Spannung bereitstellen und das Meßergebnis ist genauer.

Für den Spannungsabgriff wird hierbei nur identisches, also homogenes Drahtmaterial verwendet. Dies heißt, entweder jeweils nur der positive oder jeweils nur der negative Schenkel der beiden Thermoelemente. Dadurch wird erreicht, dass sich die Thermospannungen in den beiden identischen Schenkeln der Thermoelemente kompensieren und somit den Spannungsabfall am Widerstand nicht verfälschen. Wenn die Thermospannung gemessen werden soll, darf kein Strom von der Vierleiterauswertung des Widerstandes fließen. Daher werden Thermospannung und Widerstand nur separat, d. h. abwechselnd in der erfindungsgemäßen Weise erfaßt. Der Zuleitungswiderstand der Thermoelementendrähte geht bei der Vierleiterschaltung bekanntermaßen nicht in das Meßergebnis der Widerstandsmessung ein. Es empfiehlt sich jedoch, den Strom in die Nickelschenkel einzuprägen, da diese im Vergleich zu den Nickelchromschenkeln den kleineren spezifischen Widerstand haben, wie dies oben bereits ausgeführt ist.

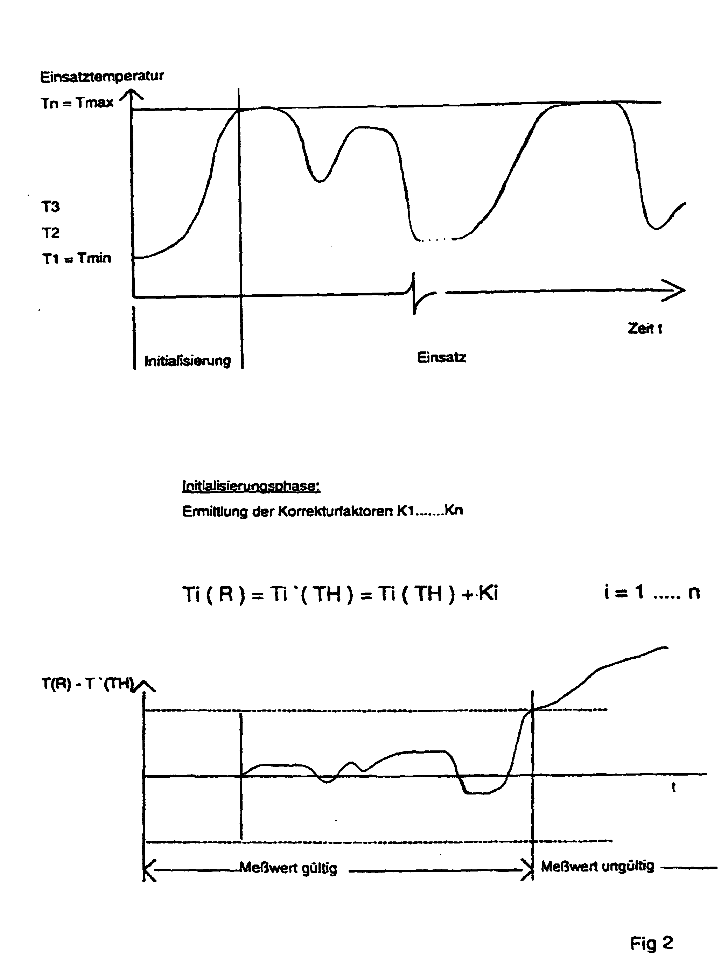

Figur 2 zeigt im oberen Bildteil beispielhaft den typischen Temperaturverlauf eines Temperaturfühlers im Einsatz. Ausgehend von Raumtemperatur wird der Fühler im Prozeß erwärmt. An diese erste Erwärmungsphase schließen sich mehrere Temperaturzyklen an. Die Selbstüberwachung eines in der vorliegenden Anmeldung beschriebenen Fühlers wird nun mit einer geeigneten Elektronik folgendermaßen durchgeführt:

Während der ersten Erwärmungsphase ermittelt die Elektronik die Meßwerte für den Thermowiderstand und mind. eines der Thermoelemente. Per Definition sollen die daraus abgeleiteten Temperaturen identisch sein. Im Allgemeinen wird dies, aufgrund von Fertigungstoleranzen des Thermowiderstandes und des Thermoelementes nicht 100%ig der Fall sein. Die Elektronik ermittelt daher für jede über den Widerstand gemessene Temperatur einen Korrekturwert für das Thermoelement. Dies geschieht nach der in der Fig. 2 dargestellten Weise. Ti(R) ist jeweilige aus dem Thermowiderstand und Ti(TH) die aus dem jeweiligen Thermoelement ermittelte Temperatur. Nach Abschluß der ersten Erwärmungsphase, in Fig. 2 Initialisierung genannt, wird, unter Berücksichtigung der obigen Korrekturwerte, die Differenz der aus dem Widerstand und dem Thermoelement abgeleiteten Temperatur überwacht. Die Korrekturwerte werden hierzu natürlich konstant gehalten. Unmittelbar nach der Initialisierungsphase wird die Abweichung zwischen Thermowiderstand und korrigiertem Thermoelement nahe Null liegen. Kommt es nun im Verlauf der Einsatzdauer des Fühlers zu einer Alterung eines der beiden Sensoren, so wird die Differenz deutlich von Null abweichen. Bei Überschreitung einer vorher zu definierenden Schwelle, wie dies im unteren Bildteil von Fig. 2 zu erkennen ist, ist die vom Fühler geforderte Meßgenauigkeit nicht mehr gegeben. Das Überschreiten der Schwelle wird von der Elektronik überwacht, und dem Anwender mitgeteilt, so dass dieser gewarnt ist und den Fühler überprüfen kann. Besonders vorteilhaft ist hierbei die Ausnutzung grundverschiedener Meßverfahren (Thermowiderstand und Thermoelement). Beide Sensoren unterliegen unterschiedlicher Alterungsmechanismen, so dass ein identische Veränderung der Meßwerte des Thermowiderstand und Thermoelement, die ja mit dem obigen Verfahren nicht erkannt würde, nahezu ausgeschlossen ist.

Während der Initialisierungsphase werden die Korrekturfaktoren Ki für den quasi kontinuierlichen Temperaturverlauf in o. g. Weise ermittelt. Somit ergibt sich für den Überwachungsfall mit einem Thermowiderstand und nur einem Thermoelement der in der dargestellten Formel aufgezeigte Sachverhalt.

In einer weiteren Ausgestaltung des obigen Selbstüberwachungsverfahrens wird auch der aus dem zweiten Thermoelement abgeleitete Meßwert berücksichtigt. Somit liegen 3 zunächst per Definition (d.h. Korrekturwert) identische Meßwerte vor. Somit kann bei Alterung eines Sensors durch ein 2 aus 3 Auswahlverfahren bestimmt werden, welcher der Sensoren gealtert ist. Die Korrekturwerte dieses Sensors können somit durch eine neue Initialisierungsphase erneut ermittelt werden. Die geforderte Meßgenauigkeit bleibt somit über lange Zeit erhalten.

## Patentansprüche

1. Verfahren zum Betrieb einer Temperaturfühleranordnung mit mindestens einem Thermoelement (3,4) und mindestens einem temperaturabhängigen Widerstand (2) sowie einer damit elektrisch verbundenen Versorgungs- und Auswerteeinheit (100), in welcher die Ausgangsmeßwerte der einzelnen Temperaturfühler erfaßt und zur Herleitung einer Temperatur bzw. eines Temperaturverlaufes ausgewertet werden,
   **dadurch gekennzeichnet,**
   **dass** während einer als Initialisierungsphase dienenden Temperaturänderungsphase aus der Differenz jeder aus Thermowiderstand und Thermoelement ermittelten Temperatur T(R) und T(TH) ein Korrekturwert für die Temperatur entweder des Thermoelementes oder des Thermowiderstandes ermittelt und addiert wird, so dass die so ermittelten resultierenden Temperaturen nahezu gleich sind,
   und **dass** in der nachfolgenden Meß- und Betriebsphase sowohl die jeweiligen resultierenden Temperaturen als auch deren Abweichungen überwacht werden und bei Abweichung über einen Toleranzbereich hinaus eine Fehlermeldung erzeugt wird.

2. Verfahren zum Betrieb einer Temperaturfühler nach Anspruch 1
   **dadurch gekennzeichnet,**
   **dass** bei einer Anordnung mit zwei Thermoelementen und einem Thermowiderstand, das weitere Thermoelement hinsichtlich seiner Angleichung der ermittelten Temperatur per Korrekturwert an den des Thermowiderstandes in entspechender Weise verfahren wird, indem das weitere Thermoelement in einem weiteren Initialisierungslauf in entsprechender Weise angeglichen wird, und in der nachfolgenden Meß- und Betriebsphase eine Fehlermeldung durch Abweichung aus dem Tolerenzbereich durch ein '2 aus 3'- Auswahlverfahren auf den entsprechenden Temperaturfühler lokalisiert wird.

3. Verfahren zum Betrieb einer Temperaturfühleranordnung nach Anspruch 1 oder 2
**dadurch gekennzeichnet,**
**dass** für eine Strommessung und für eine Spannungsmessung jeweils zwei materialgleiche Schenkel der Thermoelemente elektrisch beaufschlagt werden, und dass die Messung der Temperatur über die Thermoelemente und die Messung der Temperatur über den Temperaturwiderstand in voneinander zeitlich getrennten Meßphasen durchgeführt wird.

4. Verfahren zum Betrieb einer Temperaturfühleranordnung nach einem oder mehreren der Ansprüche 1 bis 3
**dadurch gekennzeichnet,**
**dass** die Temperaturmessungen sowohl über die Thermoelemente als auch über den temperaturabhängigen Widerstand hinsichtlich ihrer Phasen zyklisch erfolgen.

5. Verfahren zum Betrieb einer Temperaturfühleranordnung nach einem oder mehreren der vorhergehenden Ansprüche
**dadurch gekennzeichnet,**
**dass** nach Erfassung der einzelnen Meßwerte dieselben adaptiv abgespeichert werden.

6. Verfahren zum Betrieb einer Temperaturfühleranordnung nach einem oder mehreren der vorhergehenden Ansprüche
**dadurch gekennzeichnet,**
**dass** neben der Auswertung der Absoluttemperaturen auch eine Auswertung des Temperaturverlaufes bzw. der Tendenz erfolgt.

**Claims**

1. Method for measuring a temperature sensor arrangement with at least one thermocouple (3, 4) and at least one temperature-dependent resistor (2) as well as a supply and evaluation unit (100) which is electrically connected to the latter and in which the output measured values of the individual temperature sensors are detected and evaluated for deriving a temperature or a temperature variation, **characterised in**
**that** during a temperature change phase, serving as initialization phase, a correction value for the temperature either of the thermocouple or of the thermal resistor is established from the difference between each temperature T(R) and T(TH) established from the thermal resistor and the thermocouple and summed, so that the resulting temperatures which are thus established are almost equal, and **that** in the following measurement and operating phase both the respective resulting temperatures and the deviations thereof are monitored and an error message is produced in the case of a deviation beyond a tolerance range.

2. Method for operating a temperature sensor according to Claim 1,
**characterised in**
**that**, given an arrangement with two thermocouples and a thermal resistor, the additional thermocouple is operated accordingly with regard to its adjustment of the established temperature per correction value to that of the thermal resistor in that the additional thermocouple is adjusted accordingly in an additional initialization operation, and in the following measurement and operating phase an error message is localized to the appropriate temperature sensor as a result of it deviating from the tolerance range through a 2 out of 3 selection method.

3. Method for operating a temperature sensor arrangement according to Claim 1 or 2,
**characterised in**
**that** two branches, of the same material, of the thermocouples are in each case electrically acted upon for a current measurement and for a voltage measurement, and that the measurement of the temperature via the thermocouples and the measurement of the temperature via the thermal resistor are carried out in measurement phases which are separate from one another in time.

4. Method for operating a temperature sensor arrangement according to one or more of Claims 1 to 3,
**characterised in**
**that** the temperature measurements both via the thermocouples and via the temperature-dependent resistor take place cyclically with regard to their phases.

5. Method for operating a temperature sensor arrangement according to one or more of the preceding Claims,
**characterised in**
**that**, after detecting the individual measured values, these are stored in adaptive fashion.

6. Method for operating a temperature sensor according to one or more of the preceding Claims,
**characterised in**

**that** the temperature variation or trend is also evaluated in addition to evaluating the absolute temperatures.

## Revendications

1. Procédé pour le fonctionnement d'un dispositif à sonde de température comportant au moins un élément thermique (3, 4) et au moins une résistance (2) dépendant de la température, ainsi qu'une unité d'alimentation et d'évaluation (100) qui y est reliée de façon électrique, dans laquelle les valeurs de mesure de sortie des sondes de température individuelles sont saisies et sont évaluées pour en déduire une température ou une courbe de température,
**caractérisé,**
**en ce que**, durant une phase de modification de la température servant de phase d'initialisation, à partir de la différence de températures T(R) et T(TH) déterminées à partir de la résistance thermique et de l'élément thermique, une valeur de correction pour la température de l'élément thermique ou de la résistance thermique est déterminée et ajoutée de sorte que les températures résultantes ainsi déterminées sont à peu près égales, et en ce que, dans la phase de mesure et de fonctionnement suivante, aussi bien les températures résultantes correspondantes, que leurs écarts, sont surveillés, et pour un écart au-là d'un domaine de tolérance, une information d'erreur est engendrée.

2. Procédé pour le fonctionnement d'une sonde de température selon la revendication 1,
**caractérisé en ce que**, pour un dispositif comprenant deux éléments thermiques et une résistance thermique, l'élément thermique supplémentaire est mis en oeuvre de façon correspondante, en ce qui concerne son adaptation à la température déterminée avec une valeur de correction, à celle de la résistance thermique, **en ce que** l'élément thermique supplémentaire est adapté dans une étape d'initialisation supplémentaire d'une manière correspondante, et dans la phase de mesure et de fonctionnement suivante, une information d'erreur pour un écart par rapport au domaine de tolérance, est localisée par un procédé de sélection "2 de 3", sur la sonde de température correspondante.

3. Procédé pour le fonctionnement d'un dispositif à sonde de température selon la revendication 1 ou 2,
**caractérisé en ce que**, pour une mesure de courant et une mesure de tension, deux branches, identiques en ce qui concerne le matériau, des éléments thermiques sont à chaque fois alimentées de façon électrique, et **en ce que** la mesure de la température par l'intermédiaire des éléments thermiques et la mesure de la température par l'intermédiaire de la résistance thermique sont réalisées dans des phases de mesure séparées temporellement les unes des autres.

4. Procédé pour le fonctionnement d'un dispositif à sonde de température selon l'une ou plusieurs des revendications 1 à 3,
**caractérisé en ce que** les mesures de température, aussi bien par l'intermédiaire des éléments thermiques que par l'intermédiaire de la résistance dépendant de la température, sont réalisées de façon cyclique en ce qui concerne leurs phases.

5. Procédé pour le fonctionnement d'un dispositif à sonde de température selon l'une ou plusieurs des revendications précédentes,
**caractérisé en ce que**, après la saisie des valeurs de mesure individuelles, ces dernières sont enregistrées de façon adaptative.

6. Procédé pour le fonctionnement d'un dispositif à sonde de température selon l'une ou plusieurs des revendications précédentes,
**caractérisé en ce que**, en plus de l'évaluation des températures absolues, une évaluation de la courbe de température ou de la tendance est également réalisée.

# Fig.1

Initialisierungsphase:

Ermittlung der Korrekturfaktoren K1........Kn

$$T_i(R) = T_i'(TH) = T_i(TH) + K_i \qquad i = 1 ..... n$$

Fig 2